# EUROPEAN PATENT APPLICATION

(11) **EP 4 296 934 A1**
(43) Date of publication of application: **27.12.2023**
(21) Application number: 22788247.9
(22) Date of filing: 18.02.2022
(51) Int. Cl.: G06Q 50/10, H04N 21/239, H04N 21/214, H04N 21/61

(54) **LOCAL MEDIA SERVICE SYSTEM AND METHOD BY WHICH SUBSCRIPTION CHANNEL IS AUTOMATICALLY ADDED ACCORDING TO REGIONAL INCLUSION RELATIONSHIP**

(30) Priority: 15.04.2021 KR 20210049501
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2022/002392
(87) International publication number: WO 2022/220389

(57) **Abstract**

Proposed are a local media service system and method by which a subscription channel is automatically added according to a regional inclusion relationship, wherein a reference region is set for a channel operated by a local creator that uploads regional content, and a channel having a reference region that corresponds to a reference region for a channel a subscriber subscribes to or that includes the reference region for the channel the subscriber subscribes to is extracted as a parent channel and is automatically added to subscription information of the subscriber, so that a subscriber may conveniently receive regional content about the subscriber's region provided by various local creators without searching for and adding individual channels.

## Description

### Technical Field

The present disclosure relates to a local media service system and method. More particularly, the present disclosure relates to a local media service system and method by which a subscription channel is automatically added according to a regional inclusion relationship.

### Background Art

With the arrival of the era of individual media, various forms of content have been provided through various media. Recently, the forms and purposes of advertisements have become diverse, blurring the boundaries between informational content and advertisements. Anyone can now create and share content without limitations on purpose, such as information, reviews, advertisements, and daily sharing.

Platforms for sharing such a variety of content are typically operated in forms optimized for the type of content, such as video-based, image-based, or voice-based. However, there are still no dedicated platforms that can provide a wide range of region-based content by expanding the range of local advertisements or regional information provided offline on a region basis through local boxes or signage in the related art.

In the meantime, in the development of dedicated platforms capable of providing local advertisements or regional information, the most important thing is to provide a variety of regional content suitable for a user's region. In particular, community centers, police stations, and public health centers for providing various types of information and services to local residents are not provided with means for providing essential information. The institutions rely on offline bulletin boards in the institutions, postal mail, or announcements through apartment management offices to provide regional information. In addition, events held at libraries and cultural centers require residents' active participation, but information is only provided through individual websites or offline bulletin boards of the respective institutions. Therefore, it is difficult to access information and only few residents use the information.

In particular, even if regional content can be checked online, it is difficult to perform access periodically to receive information because individual institutions operate their own websites or applications. Furthermore, it is difficult to easily identify what institution provides what information and what event is held, making it difficult to obtain necessary information through searching.

Therefore, there is a need for the development of technology to provide more diverse regional content to local residents and to make it easier for the residents to access regional information provided by various institutions in the region, in order to encourage the residents in participation.

As a related art of the present disclosure, Korean Patent No. 10-1937723 (Titled: VIRTUAL LOCAL BOX ADVERTISEMENT SERVICE SYSTEM IN WHICH BANNER ADVERTISEMENT IS DISPLAYED THROUGH VIRTUAL LOCAL BOX) was proposed.

### Disclosure

### Technical Problem

The present disclosure has been made keeping in mind the above problems occurring in the previously proposed methods, and the present disclosure is directed to providing a local media service system and method by which a subscription channel is automatically added according to a regional inclusion relationship, wherein a reference region is set for a channel operated by a local creator that uploads regional content, and a channel having a reference region that corresponds to a reference region for a channel a subscriber subscribes to or that includes the reference region for the channel the subscriber subscribes to is extracted as a parent channel and is automatically added to subscription information of the subscriber, so that a subscriber may conveniently receive regional content about the subscriber's region provided by various local creators without searching for and adding individual channels.

### Technical Solution

In order to achieve the above objective, according to an aspect of the present disclosure, there is provided a local media service system by which a subscription channel is automatically added according to a regional inclusion relationship,
the local media service system providing a local media platform for outputting regional content to a user terminal, and including:
a service server configured to manage a channel operated by a local creator that uploads regional content to the local media platform, and subscription information of a subscriber that subscribes to the channel of the local creator, and provide the subscriber with the regional content uploaded to the channel according to the subscription information,
wherein the service server includes:
   a channel management part configured to set a reference region for the channel of the local creator, and stratify and manage a plurality of the channels according to an inclusion relationship of the reference region;
   a subscription management part configured to manage the subscription information of the subscriber that subscribes to the channel; and
   a channel extractor configured to extract, as a parent channel among the stratified and managed plurality of the channels, a channel having a reference region that corresponds to the reference region for the channel that the subscriber subscribes to or that includes the reference region for the channel that the subscriber subscribes to, and
   the subscription management part is configured to
   automatically add the parent channel extracted by the channel extractor to the subscription information of the subscriber according to consent of the subscriber.

Preferably, the channel management part is configured to
stratify and manage the plurality of the channels according to an administrative district system.

Preferably, the channel management part is configured to
use regional information input from the local creator to set the reference region for the channel.

Preferably,
a content analyzer configured to analyze the regional content uploaded to the channel of the local creator is further included.

More preferably, the channel management part is configured to
use an analysis result of the content analyzer to set the reference region for the channel.

Preferably,
a content management part configured to receive the regional content for the reference region set for the channel of the local creator and upload the regional content to the channel is further included.

Preferably, the channel of the local creator is
the channel of the local creator that works based on the reference region and provides the regional content including local information of the region, and is the channel managed by at least one local institution selected from a group of an apartment, a community center, a district office, a city hall, a public health center, a police station, a fire station, a library, and a cultural center.

In addition, in order to achieve the above objective, according to an aspect of the present disclosure, there is provided a local media service method by which a subscription channel is automatically added according to a regional inclusion relationship,
the local media service method providing a local media platform for outputting regional content to a user terminal and including:
each step is performed by a service server for managing a channel of a local creator that uploads regional content to a local media platform and subscription information of a subscriber that subscribes to a channel of a local creator,
(1) setting a reference region for the channel of the local creator, and stratifying and managing a plurality of channels according to an inclusion relationship of the reference region;
(2) extracting, as a parent channel among the stratified and managed plurality of channels, a channel having a reference region that corresponds to the reference region for the channel that the subscriber subscribes to or includes the reference region; and
(3) automatically adding the parent channel extracted by the channel extractor to the subscription information of the subscriber according to consent of the subscriber.

### Advantageous Effects

According to the local media service system and method, proposed in the present disclosure, by which a subscription channel is automatically added according to a regional inclusion relationship, a reference region is set for a channel operated by a local creator that uploads regional content, and a channel having a reference region that corresponds to a reference region for a channel a subscriber subscribes to or that includes the reference region for the channel the subscriber subscribes to is extracted as a parent channel and is automatically added to subscription information of the subscriber, so that a subscriber may conveniently receive regional content about the subscriber's region provided by various local creators without searching for and adding individual channels.

### Description of Drawings

FIG. 1 is a diagram illustrating an overall configuration of a local media service system by which a subscription channel is automatically added according to a regional inclusion relationship, according to an embodiment of the present disclosure.
FIG. 2 is a diagram illustrating a local media platform provided by a local media service system by which a subscription channel is automatically added according to a regional inclusion relationship, according to an embodiment of the present disclosure.
FIG. 3 is a diagram illustrating a detailed configuration of a service server, in a local media service system by which a subscription channel is automatically added according to a regional inclusion relationship, according to an embodiment of the present disclosure.
FIG. 4 is a diagram illustrating an example in which a channel management part stratifies and manages a plurality of channels, in a local media service system by which a subscription channel is automatically added according to a regional inclusion relationship, according to an embodiment of the present disclosure.
FIG. 5 is a diagram illustrating an example in which a channel extractor extracts a parent channel, in a local media service system by which a subscription channel is automatically added according to a regional inclusion relationship, according to an embodiment of the present disclosure.
FIG. 6 is a diagram illustrating an example in which a parent channel is automatically subscribed, in a local media service system by which a subscription channel is automatically added according to a regional inclusion relationship, according to an embodiment of the present disclosure.
FIG. 7 is a flowchart illustrating a local media service method by which a subscription channel is automatically added according to a regional inclusion relationship, according to an embodiment of the present disclosure.

### <Description of the Reference Numerals in the Drawings>

100: service server
110: channel management part
120: subscription management part
130: channel extractor
140: content analyzer
150: content management part
200: subscriber terminal
300: local creator's terminal
S100: setting reference region for channel of local creator, and stratifying and managing plurality of channels according to inclusion relationship of reference region
S200: extracting, as parent channel among stratified and managed plurality of channels, channel having reference region that corresponds to reference region for channel that subscriber subscribes to or includes reference region
S300: automatically adding parent channel extracted by channel extractor to subscription information of subscriber according to consent of subscriber

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being "connected" to another part, it includes not only being "directly connected", but also being "indirectly connected" by interposing the other part therebetween. In addition, when a part "includes" an element, this means that it further includes other elements, but does not exclude other elements, unless specifically stated otherwise.

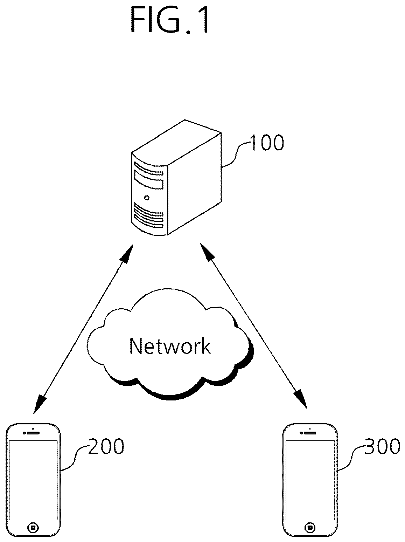

FIG. 1 is a diagram illustrating an overall configuration of a local media service system by which a subscription channel is automatically added according to a regional inclusion relationship, according to an embodiment of the present disclosure. As shown in FIG. 1, a local media service system by which a subscription channel is automatically added according to a regional inclusion relationship according to an embodiment of the present disclosure may include a service server 100, and may further include a subscriber terminal 200 and a local creator's terminal 300.

That is, the present disclosure relates to a local media service system that provides a local media platform for outputting regional content to a, user terminal. The service server 100 operates the local media platform for uploading regional content created by a local creator and providing the regional content to users, and manages subscription information of a subscriber that subscribes to a channel operated by each local creator such that the subscriber is provided with the regional content uploaded to the channel according to the subscription information. Herein, only a local creator that is an operator is allowed to upload regional content to the local creator's channel.

Herein, the service server 100 may provide the local media platform to a user terminal, such as the subscriber terminal 200 and the local creator's terminal 300. This means that the service server 100 generates data for the local media platform to be displayed on a display of a user terminal and transmits the same to the user terminal. That is, when the service server 100 provides the local media platform to a user terminal, the user, such as a subscriber or a local creator, may upload regional content to the local media platform or view uploaded regional content through the user terminal.

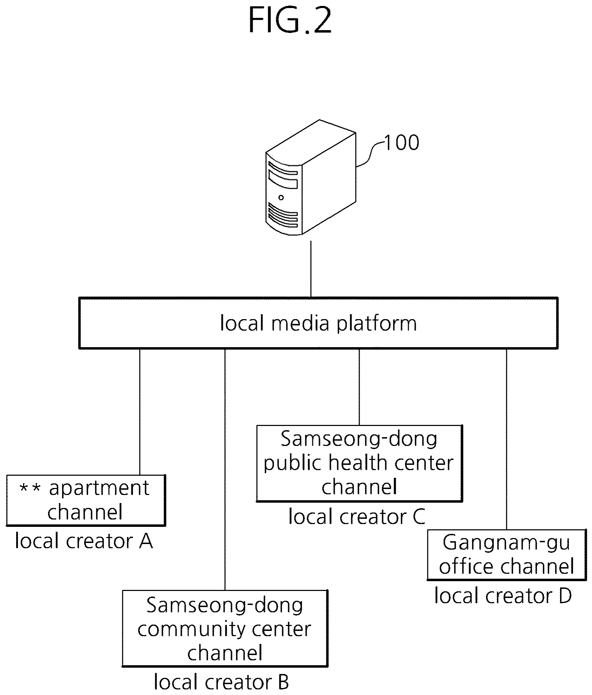

FIG. 2 is a diagram illustrating a local media platform provided by a local media service system by which a subscription channel is automatically added according to a regional inclusion relationship, according to an embodiment of the present disclosure. As shown in FIG. 2, a service server 100 of a local media service system by which a subscription channel is automatically added according to regional inclusion relationship according to an embodiment of the present disclosure may manage channels operated by several local creators, and may operate and provide a local media platform for providing regional content uploaded to each channel.

Herein, the regional content is content including regional information, and may have various characteristics, such as advertising content, informational content, and entertainment content, and may be in various forms, such as text, image, sound, video, and multimedia.

Herein, a reference region may be set for a channel of a local creator. The reference region may be resulting from setting a regional range of regional content provided through the corresponding channel. More specifically, a reference region may be at least one selected from the group of a present area and an administrative district for the channel. For example, a local creator or an operator of the local media platform may set a reference region. An administrative district, such as Gangwon-do, Gangnam-gu, or Samseong-dong, or a particular apartment complex may be set as a reference region. Herein, reference regions may have various shapes, such as circles, ellipses, or polygons, or may be irregular. A plurality of reference regions may be set for one channel.

A local creator's channel is a channel of a local creator that works based on a reference region and provides regional content including local information of a region. The channel may be managed by at least one local institution selected from the group of an apartment, a community center, a district office, a city hall, a public health center, a police station, a fire station, a library, and a cultural center. However, the channel does not necessarily have to be a channel of a local institution. When regional content is provided on the basis of a region, a channel managed by an individual or a business operator or a company may also be included.

Various types of regional content related to a reference region for each channel may be uploaded to and included in the local media platform. For example, as shown in FIG. 2, "** apartment channel", which is a channel operated by local creator A, may include regional content, such as elevator inspection information, tree disinfection information, and separate collection guidance information related to the corresponding apartment complex. In addition, "Samseong-dong public health center channel", which is a channel operated by local creator C, may include regional content, such as information on an event held at the corresponding public health center, infectious disease status information of the region, and information on whether a public health center is closed.

Hereinafter, each element of a local media service system by which a subscription channel is automatically added according to a regional inclusion relationship according to an embodiment of the present disclosure will be described in detail with reference to FIGS. 1 and 2.

The service server 100 manages channels operated by local creators that uploads regional content to the local media platform and subscription information of subscribers that subscribe to the channels of the local creators, and provides the subscriber with the regional content uploaded to the channels according to the subscription information. In addition, the service server 100 may upload regional content received from a terminal 300 of a local creator, to the channel operated by the local creator.

More specifically, while providing a subscriber with the regional content of a subscribed channel, the service server 100 may notify the subscriber of uploading of new regional content through a push alarm. However, even a non channel subscriber may access the local media platform to receive regional content, and channel subscription may be required to use a subscription service, such as a push alarm provided to a subscriber.

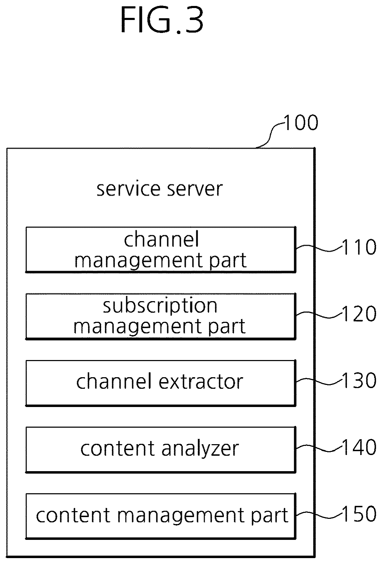

To this end, the service server 100 may transmit and receive various types of signals and data to and from user terminals, which include the subscriber terminal 200 and the local creator's terminal 300, over a network. Herein, the network may be realized as a wired network, such as a local area network (LAN), a wide area network (WAN), or a value-added network (VAN), or any type of wireless network, such as a mobile radio communication network, a satellite network, Bluetooth, a wireless broadband internet (Wibro), High Speed Downlink Packet Access (HSDPA), Long-Term Evolution (LTE), 5th generation mobile telecommunication (5G), etc. A detailed configuration of the service server 100 will be described later with reference to FIG. 3.

The subscriber terminal 200 may receive the local media platform operated by the service server 100 to output the same to an output device, and may receive regional content uploaded to a subscribed channel. That is, the service server 100 may provide a channel subscription service. The channel subscription service may include a service in which when a subscriber subscribes to a channel, regional content uploaded to the subscribed channel is provided as a separate menu, or when new regional content is uploaded to a subscription channel, a push message or alarm is given for notification.

The local creator's terminal 300 is a terminal of a creator that supplies regional content to the local media platform, and may produce the regional content, upload the regional content to the channel operated by the creator to share the regional content with users including a subscriber.

Herein, the user terminals including the subscriber terminal 200 and the local creator's terminal 300 may be realized as various electronic devices. The electronic devices may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lenses, or a head-mounted device (HMD)), a fabric or clothing-integrated type (e.g., electronic clothing), a body-attachable type (e.g., a skin pad or tattoo), and an implantable circuit. In various embodiments, the electronic devices are not limited to the aforementioned devices, and may be a combination of two or more of the aforementioned various devices.

FIG. 3 is a diagram illustrating a detailed configuration of a service server 100, in a local media service system by which a subscription channel is automatically added according to a regional inclusion relationship, according to an embodiment of the present disclosure. As shown in FIG. 3, the service server 100 of the local media service system by which a subscription channel is automatically added according to a regional inclusion relationship according to an embodiment of the present disclosure may include a channel management part 110, a subscription management part 120, and a channel extractor 130, and may further include a content analyzer 140 and a content management part 150.

The channel management part 110 may set a reference region for a channel of a local creator, and may stratify and manage a plurality of channels according to an inclusion relationship of a reference region. Herein, the channel management part 110 may use regional information input from a local creator to set a reference region for the channel.

In the meantime, the stratifying of the channels by the channel management part 110 may mean that the channels are classified into, for example, a super-category, a base category, and a sub-category, for management, wherein the channels are classified according to an inclusion relationship of a reference region set for each channel and managed. More specifically, the channel management part 110 may stratify and manage a plurality of channels according to an administrative district system.

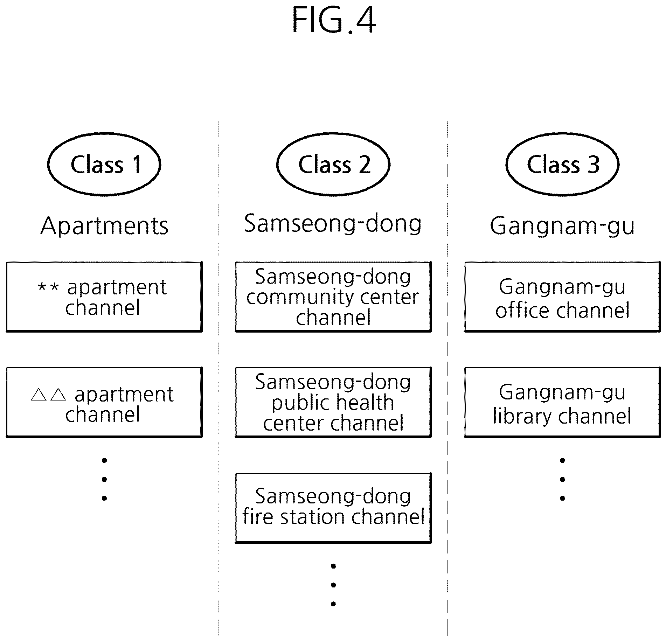

FIG. 4 is a diagram illustrating an example in which a channel management part 110 stratifies and manages a plurality of channels, in a local media service system by which a subscription channel is automatically added according to a regional inclusion relationship, according to an embodiment of the present disclosure. As shown in FIG. 4, regarding the channel management part 110 of the local media service system by which a subscription channel is automatically added according to a regional inclusion relationship according to an embodiment of the present disclosure, Class 1, which is a class corresponding to the smallest, sub-category, may include channels having individual apartment complexes in Samseong-dong, Gangnam-gu as reference regions, and Class 2, which is a class corresponding to a base category, includes channels having Samseong-dong as a reference region, for example, channels of a Samseong-dong community center, a Samseong-dong public health center, and a Samseong-dong fire station. In addition, Class 3, which is a class corresponding to the super-category, may include a Gangnam-gu office channel and a Gangnam-gu library channel having Gangnam-gu as a reference region. In addition, channels with wider reference regions, such as Seoul, the metropolitan area, and South Korea, may be classified as a higher class. In this way, the channel management part 110 may stratify a plurality of channels according to an inclusion relationship of a reference region set for each channel to classify and manage the channels.

The subscription management part 120 may manage subscription information of a subscriber that subscribes to a channel. Herein, the subscription information may include a list of channels that a subscriber subscribes to, and may include a subscription start date, and subscription history for each channel. The service server 100 may use the subscription information managed by the subscription management part 120 to provide a subscriber terminal 200 with a subscription service, such as a push message or alarm.

The channel extractor 130 may extract, as a parent channel among the stratified and managed plurality of channels, a channel having a reference region that corresponds to a reference region for a channel that a subscriber subscribes to or includes the reference region for the channel that the subscriber subscribes to. The subscription management part 120 may automatically add a parent channel extracted by the channel extractor 130 according to the consent of a subscriber to subscription information of the subscriber.

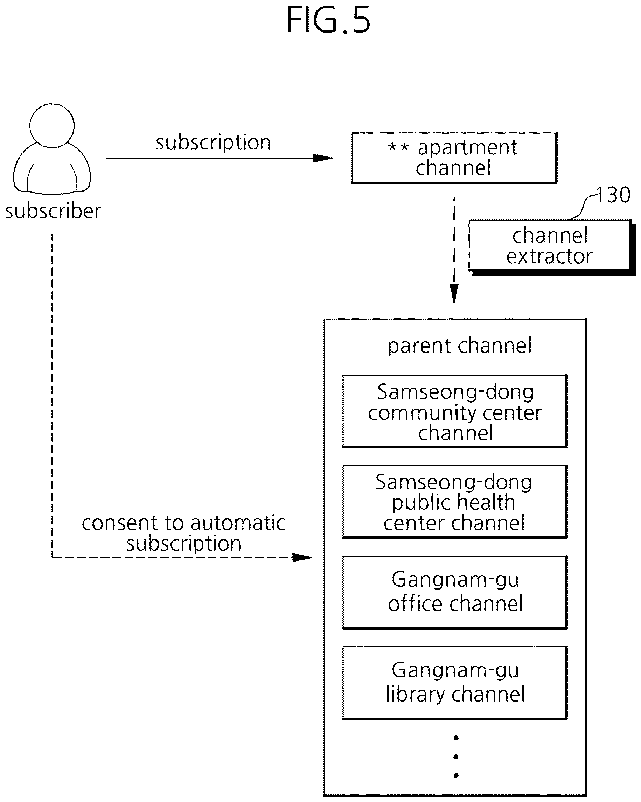

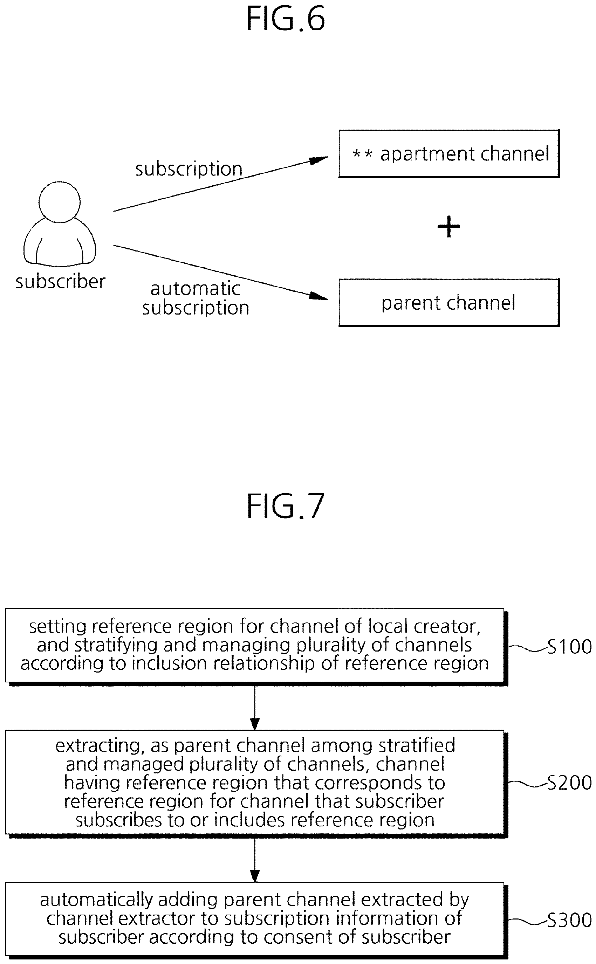

FIG. 5 is a diagram illustrating an example in which a channel extractor 130 extracts a parent channel, in a local media service system by which a subscription channel is automatically added according to a regional inclusion relationship, according to an embodiment of the present disclosure. FIG. 6 is a diagram illustrating an example in which a parent channel is automatically subscribed, in a local media service system by which a subscription channel is automatically added according to a regional inclusion relationship, according to an embodiment of the present disclosure. As shown in FIG. 5, in a local media service system by which a subscription channel is automatically added according to a regional inclusion relationship according to an embodiment of the present disclosure, when a subscriber is subscribing to "** apartment channel", the channel extractor 130 may extract, as parent channels among a stratified and managed plurality of channels as shown in FIG. 4, Class 2 channels having Samseong-dong, in which ** apartment complex is located, as a reference region, and Class 3 channels having Gangnam-gu, which includes **apartment complex and Samseong-dong, as a reference region. The subscription management part 120 may automatically add the parent channels extracted with the consent of the subscriber to the subscription information, so that the subscriber subscribing to "** apartment channel" can automatically subscribe to the parent channels as shown in FIG. 6. Accordingly, just by subscribing to an apartment channel without searching for channels or regional content, a subscriber may receive, as regional content, various news about the apartment where the subscriber lives as well as various news about a library, a public health center, a police station, and a cultural center in the region where the subscriber lives.

According to an embodiment, when a subscriber is subscribing to "Samseong-dong community center channel", the channel extractor 130 may extract, as parent channels among the plurality of channels managed as shown in FIG. 4, "Samseong-dong public health center channel" and "Samseong-dong fire station channel" having Samseong-dong as a reference region corresponding to a reference region of the Samseong-dong community center, and "Gangnam-gu office channel" and "Gangnam-gu library channel" having Gangnam-gu including Samseong-dong as a reference region.

In the meantime, with the consent of a subscriber, the subscription management part 120 may add a parent channel to subscription information of the subscriber. When a subscriber becomes a member, a consent procedure may be processed so that the consent for automatic subscription to a parent channel is obtained in advance. Alternatively, when a subscriber makes a request for subscription to a particular channel, a consent procedure for automatic subscription to a parent channel of the particular channel may be processed. Alternatively, after the channel extractor 130 extracts a parent channel, a consent procedure for automatic subscription to the extracted parent channel may be processed. In addition, in the consent procedure, a message notifying that the parent channel is automatically subscribed to the subscriber terminal 200 and an intention of giving consent may be electrically received.

In response to a subscriber's request, the entire parent channel or individual channels constituting a parent channel may be added to the subscription information or unsubscribed. The subscription management part 120 may edit the subscription information to add or unsubscribe a subscription channel.

The content analyzer 140 may analyze regional content uploaded to a channel of a local creator. Herein, the content analyzer 140 may analyze text or tags of the regional content using a text mining method or a natural language processing technology, and may analyze images or videos using an image processing technology. An analysis result of the content analyzer 140 may be used in various ways, for example, determining whether regional content is suitable for the channel, and determining what characteristics of regional content subscribers prefer.

In particular, the channel management part 110 may use an analysis result of the content analyzer 140 to set a reference region for a channel. That is, a reference region for a channel may be set by a local creator operating the channel or by an operator of the local media platform. Alternatively, the channel management part 110 may set the reference region using an analysis result of regional content uploaded to the channel. For example, when the name of a particular region is continuously tagged or when as a result of a text analysis or image analysis, regional content for the particular region is equal to or greater than a predetermined ratio, the particular region may be set as a reference region for the channel.

The content management part 150 may receive regional content for a reference region set for a channel of a local creator and may update the regional content to the channel. In addition, the content management part 150 may use an analysis result of the content analyzer 140 not to upload regional content to a channel and to notify the local creator's terminal 300 of reference region violation and uploading limitation when a predetermined number or ratio or more of regional content for a region unrelated to a reference region is received.

FIG. 7 is a flowchart illustrating a local media service method by which a subscription channel is automatically added according to a regional inclusion relationship, according to an embodiment of the present disclosure. As shown in FIG. 7, according to an embodiment of the present disclosure, in a local media service method by which a subscription channel is automatically added according to a regional inclusion relationship, each step is performed by a service server 100 for managing a channel of a local creator that uploads regional content to a local media platform and subscription information of a subscriber that subscribes to a channel of a local creator. The local media service method may include: setting a reference region for a channel of a local creator, and stratifying and managing a plurality of channels according to an inclusion relationship of a reference region in step S100; extracting, as a parent channel among the stratified and managed plurality of channels, a channel having a reference region that corresponds to a reference region for a channel that a subscriber subscribes to or includes the reference region in step S200; and automatically adding a parent channel extracted by a channel extractor 130 to subscription information of a subscriber according to consent of the subscriber in step S300.

Details of each of the steps have been sufficiently described in relation to a local media service system by which a subscription channel is automatically added according to a regional inclusion relationship according to an embodiment of the present disclosure, so a detailed description thereof will be omitted.

As described above, according to a local media service system and method, proposed in the present disclosure, by which a subscription channel is automatically added according to a regional inclusion relationship, a reference region is set for a channel operated by a local creator that uploads regional content, and a channel having a reference region that corresponds to a reference region for a channel a subscriber subscribes to or that includes the reference region for the channel the subscriber subscribes to is extracted as a parent channel and is automatically added to subscription information of the subscriber, so that a subscriber may conveniently receive regional content about the subscriber's region provided by various local creators without searching for and adding individual channels.

In the meantime, the present disclosure may include a computer-readable recording medium including program commands for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program commands, data files, data structures, and the like separately or in combinations. Herein, the program commands being recorded in the computer-readable medium may correspond to a program command that is specifically designed and configured for the embodiments of the present disclosure, or the program command may correspond to a program command that is disclosed and available to anyone skilled in or related to computer software. For example, the program commands may include machine language codes 1, which are created by a compiler, as well as high-level language codes 1, which may be executed by a computer by using an interpreter.

Various modifications or applications of the above-described present disclosure may be made by those skilled in the art to which the present disclosure belongs, and the scope of the technical idea according to the present disclosure should be defined by the following claims.

## Claims

1. A local media service system for providing a local media platform for outputting regional content to a user terminal, the local media service system comprising:
a service server (100) configured to manage a channel operated by a local creator that uploads regional content to the local media platform, and subscription information of a subscriber that subscribes to the channel of the local creator, and provide the subscriber with the regional content uploaded to the channel according to the subscription information,
wherein the service server (100) is configured to provide a channel subscription service in which regional content uploaded to a subscribed channel is provided as a separate menu or notification is given when new regional content is uploaded to the subscribed channel,
wherein the service server (100) comprises:
a channel management part (110) configured to set a reference region for the channel of the local creator, and stratify and manage a plurality of the channels according to an inclusion relationship of the reference region;
a subscription management part (120) configured to manage the subscription information of the subscriber that subscribes to the channel; and
a channel extractor (130) configured to extract, as a parent channel among the stratified and managed plurality of the channels, a channel having a reference region that corresponds to the reference region for the channel that the subscriber subscribes to or that includes the reference region for the channel that the subscriber subscribes to,
wherein the subscription management part (120) is configured to automatically add the parent channel extracted by the channel extractor (130) to the subscription information of the subscriber according to consent of the subscriber,
wherein the service server (100) further comprises:
a content analyzer (140) configured to analyze the regional content uploaded to the channel of the local creator; and
a content management part (150) configured to receive the regional content for the reference region set for the channel of the local creator and upload the regional content to the channel, and
wherein the channel management part (110) is configured to use an analysis result of the content analyzer (140) to set the reference region for the channel.

2. The local media service system of claim 1, wherein the channel management part (110) is configured to stratify and manage the plurality of the channels according to an administrative district system.

3. The local media service system of claim 1, wherein the channel management part (110) is configured to use regional information input from the local creator to set the reference region for the channel.

4. The local media service system of claim 1, wherein the channel of the local creator is the channel of the local creator that works based on the reference region and provides the regional content including local information of the region, and is the channel managed by at least one local institution selected from a group of an apartment, a community center, a district office, a city hall, a public health center, a police station, a fire station, a library, and a cultural center.
